Europäisches Patentamt

European Patent Office

Office européen des brevets

(11) Veröffentlichungsnummer: **0 400 317**
**A1**

(12) # EUROPÄISCHE PATENTANMELDUNG

(21) Anmeldenummer: 90107463.3

(22) Anmeldetag: 19.04.90

(51) Int. Cl.5: **A01C 7/04, A01C 15/00,**
**A01B 63/24**

(30) Priorität: 29.05.89 DE 3917438

(43) Veröffentlichungstag der Anmeldung:
05.12.90 Patentblatt 90/49

(84) Benannte Vertragsstaaten:
**DE FR IT NL**

(71) Anmelder: **Karl Becker GMBH & CO K.G.**
**Maschinenfabrik**
**Postfach 44**
**D-3525 Oberweser 1-Gieselwerder(DE)**

(72) Erfinder: **von Allwörden, Wilhelm**
**Alpenstrasse 18**
**D-7704 Gailingen(DE)**

(74) Vertreter: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2(DE)**

(54) Mehrreihige Sämaschine.

(57) Beschrieben wird eine mehrreihige Sämaschine, insbesondere eine Einzelkornsämaschine, bei der ein zur Fahrtrichtung angestellter Tragrahmen eine Vielzahl von Säaggregaten (20) trägt, deren Seitenabstand zueinander einstellbar ist. Der Rahmen (4) bildet für zumindest zwei benachbarte Säaggregate einer Sämaschinenseite eine Gleitführung. Zwischen diesen Aggregaten ist ein in der wirksamen Länge einstellbarer Distanzhalter vorgesehen, über den bei Verschiebung des einen Aggregats (20-6) eine Mitnahme des benachbarten Aggregats (20-5) in vorbestimmtem Seitenabstand erfolgt. Durch diese Maßnahmen gelingt es, die Sämaschine mit wenigen Handgriffen und in kürzester Zeit von Säbetrieb auf Fahrbetrieb bzw. von einem Reihenabstand auf den anderen umzurüsten.

FIG.1

# Mehrreihige Sämaschine

Die Erfindung betrifft eine mehrreihige Sämaschine, insbesondere eine Einzelkornsämaschine, gemäß dem Oberbegriff des Patentanspruchs 1.

Derartige Maschinen weisen eine Vielzahl von Säaggregaten auf, die in vorbestimmtem Seitenabstand zueinander am Trägerrahmen festlegbar sind, um den Reihenabstand an das jeweilige Saatgut anpassen zu können. Insbesondere bei Einzelkornsämaschinen ist es erforderlich, jedem Säaggregat einen Antriebszweig zuzuordnen, um ein Samen-Abgaberad, beispielsweise in der Ausführung als Zellenrad, mit der jeweiligen Synchrongeschwindigkeit anzutreiben, die an die Fahrgeschwindigkeit der Sämaschine angepaßt ist.

Herkömmliche Sämaschinen der eingangs genannten Art werden vier- bzw. sechsreihig ausgeführt, so daß sich bei der Aussaat von Mais, der mit einem Reihenabstand zwischen 700 und 800 mm ausgesät wird, eine Maschinenbreite von etwa 4,3 m ergibt. Da eine Maschine mit solcher Breite nach der Straßenverkehrszulassungsordnung nicht mehr auf öffentlichen Straßen verfahren werden darf, wurde bereits vorgeschlagen, die jeweils äußeren Säaggregate an einem Holm festzulegen, der relativ zum Trägerrahmen verschiebbar gehalten ist. Zum Straßentransport der Sämaschine können dementsprechend die äußeren Säaggregate zusammen mit dem Holm nach innen verschoben werden, wodurch sich die Gesamtbreite der Maschine auf ein zulässiges Maß von unter 3 m reduzieren läßt.

Mit diesem Mehraufwand kann zwar bei herkömmlichen mehrreihigen Sämaschinen der Arbeitsaufwand zum Umrüsten der Sämaschine vom Sä- auf den Fahrbetrieb reduziert werden. Dieser Vorteil muß jedoch mit einem erheblichen vorrichtungstechnischen Mehraufwand erkauft werden, so daß man aus Wirtschaftlichkeitsgründen vielfach davon abgesehen hatte, diese Komfortverbesserung in Anspruch zu nehmen.

Der Erfindung liegt deshalb die Aufgabe zugrunde, eine mehrreihige Sämaschine gemäß dem Oberbegriff des Patentanspruchs 1 zu schaffen, wobei der der konstruktionstechnische Aufwand für das schnelle Umrüsten vom Sä- auf den Fahrbetrieb zusätzlich zur Steigerung der Wirtschaftlichkeit des Einsatzes herangezogen werden kann.

Diese Aufgabe wird durch die im kennzeichnenden Teil des Patentanspruchs 1 angegebenen Merkmale gelöst.

Erfindungsgemäß wird die Verschiebbarkeit des Säaggregats relativ zum Trägerrahmen dazu ausgenützt, um mit einer Stellbewegung nicht nur die Gesamtbreite der Maschine, sondern auch den Abstand der Säaggregate untereinander auf ein vorbestimmtes Maß einzustellen. Auf diese Weise wird der konstruktionstechnische Mehraufwand zur einfachen Verringerung der Maschinenbreite zusätzlich dazu herangezogen, um den Reihenabstand der Sämaschine in kürzester Zeit zu verändern. Zu diesem Zweck dient der in der wirksamen Länge einstellbare Distanzhalter, über den bei Verschiebung zumindest eines Säaggregats eine Mitnahme des benachbarten Aggregats in vorbestimmtem, vorzugsweise voreingestelltem Seitenabstand erfolgt, der dem neu einzustellenden Reihenabstand entspricht. Das Einstellen des Reihenabstandes, das bislang sehr viel Zeit in Anspruch genommen hat, reduziert sich durch die erfindungsgemäßen Maßnahmen auf die Voreinstellung der wirksamen Länge der einstellbaren Distanzhalter. Dabei ergibt sich der zusätzliche Vorteil, daß die maximale Arbeitsbreite der Sämaschine weiter angehoben werden kann, weil nicht nur die äußersten Säaggregate, sondern auch weiter innen liegende Aggregate mit verschiebbar gestaltet sind. Die erfindungsgemäßen Maßnahmen eröffnen auf diese Weise die Möglichkeit, auch achtreihige Einzelkornsämaschinen zu konzipieren, ohne dadurch den Transport der Sämaschine auf der Straße zu erschweren.

Vorzugsweise werden die relativ zum Tragrahmen verschiebbaren Säaggregate gemäß Patentanspruch 2 über eine Gleitführung am Trägerrahmen fixiert. Der im Querschnitt ohnehin verhältnismäßig große Trägerrahmen schafft auf diese Art und Weise eine ausreichend große Funktionsfläche, um die Säaggregate einerseits mit geringen Flächenpressungen zu führen und andererseits zuverlässig in Lage zu halten.

Eine verhältnismäßig einfache Ausführungsform ergibt sich mit den Merkmalen des Patentanspruchs 3. Allerdings ist bei dieser Variante darauf zu achten, daß der jeweils neu eingestellte Reihenabstand auf die Spurweite der Stützräder abgestimmt ist.

Die Weiterbildung gemäß Patentanspruch 4 erlaubt es, den Reihenabstand frei und ohne Rücksicht auf die Lage der Stützräder einzustellen.

Ein Maximum an Wirtschaftlichkeit der Sämaschine ergibt sich mit der Weiterbildung gemäß Patentanspruch 5. Mit dieser Weiterbildung gelingt es, sämtliche Säaggregate mit ein und derselben Stellbewegung so zu verschieben, daß zwischen allen Säaggregaten ein gleicher, veränderter Reihenabstand vorliegt.

Vorzugsweise wird lediglich ein Säaggregat, vorzugsweise das äußerste Säaggregat einer Sämaschinenseite zur Einstellung des Reihenabstandes angetrieben. Der Distanzhalter kann in diesem Fall dazu herangezogen werden, die Relativlage der Säaggregate zueinander festzulegen bzw. zu stabilisieren. Selbstverständlich können zusätzliche Arretierhilfen zur Lagesicherung der einzelnen Säaggregate vorgesehen sein.

Eine besonders einfache Führung der Säaggregate am Trägerrahmen ergibt sich mit der Weiterbildung gemäß Patentanspruch 10, wobei sich gezeigt hat, daß sich auf diese Weise nicht nur der Trägerrahmen, sondern auch die Führung selbst hoch belasten läßt.

Für den Fall, daß die einzelnen Säaggregate von einem zentralen Antrieb versorgt werden, der von der Bewegung der Stützräder abgeleitet ist, ist es vorteilhaft, die Sämaschine gemäß Patentanspruch 11 weiterzubilden.

Eine besonders platzsparende Anordnung der Antriebswelle ergibt sich mit der Weiterbildung gemäß Patentanspruch 14. Hierbei wird der von den Radschenkeln in Anspruch genommene Bauraum optimal ausgenutzt.

Die Neueinstellung des Reihenabstandes erfolgt vorzugsweise in einem vom Boden abgehobenen Zustand der Säaggregate. Dies kann beispielsweise dadurch bewerkstelligt werden, daß die gesamte Sämaschine unter Zuhilfenahme einer Dreipunkt-Hydraulik des landwirtschaftlichen Zugfahrzeuges ausgehoben wird und anschließend die Neueinstellung erfolgt. Für den Fall, daß die Sämaschine Anschlusstellen für die Dreipunkt-Hydraulik nicht aufweist, ist es vorteilhaft, wenn die einzelnen Säaggregate mittels einer separaten Hubeinrichtung hochgeschwenkt werden. In diesem Zusammenhang kann beispielsweise ein Parallel-Lenkergetriebe Anwendung finden, das federunterstützt arbeitet und in der abgesenkten sowie in der hochgeschwenkten Stellung arretierbar ist.

Die Mitnahme untereinander benachbarter Säaggregate erfolgt vorzugsweise mit den Merkmalen des Patentanspruchs 17. Es ist auch denkbar, daß mittels eines einzigen, teleskopartigen Distanzhaltestabes gearbeitet wird, der sich parallel zum Trägerrahmen erstreckt und somit allen Säaggregaten gemeinsam zugeordnet ist. Je nachdem, welcher Reihenabstand eingestellt werden soll, werden dann die einzelnen Segmente arretiert bzw. entarretiert. In der einfachsten Form ist jeweils zwei benachbarten Säaggregaten ein Stab zugeordnet, auf dem zwischen den Säaggregaten ein Druck-Anschlagkörper verstellbar angeordnet ist.

Die Einstellbarkeit des Druck-Anschlagkörpers auf dem Stab erfolgt in der einfachsten Version dadurch, das der Anschlagkörper ein Innengewinde hat, mit dem er in ein Außengewinde des Stabs eingreift. Auf die Art und Weise kann der Reihenabstand stufenlos eingestellt werden. Es ist auch möglich, die axiale Lage des Druck-Anschlagkörpers an diskreten Stellen festzulegen. In diesem Fall kommt vorzugsweise eine Stiftverbindung zum Einsatz, die mit festen Bohrungen im Distanzhaltestab zusammenwirkt.

Mit den erfindungsgemäßen Maßnahmen kann mit Leichtigkeit eine Sämaschine bereitgestellt werden, bei der der Reihenabstand zwischen etwa 400 und etwa 800 mm einstellbar und vorzugsweise durch einen zentralen Antrieb veränderbar ist.

Wenn der Trägerrahmen selbst ausziehbar, vorzugsweise teleskopartig ausziehbar gestaltet ist, läßt sich die Arbeitsbreite der Sämaschine zusätzlich anheben.

Weitere vorteilhafte Ausgestaltungen sind Gegenstand der übrigen Unteransprüche.

Nachstehend werden anhand schematischer Zeichnungen mehrere Ausführungsbeispiele der Erfindung näher erläutert. Es zeigen:

Fig. 1 eine perspektivische Darstellung einer ersten Ausführungsform der Sämaschine mit einer ersten Einstellung des Reihenabstandes;

Fig. 2 eine perspektivische Darstellung der Ausführungsform gemäß Fig. 1 mit einer zweiten Einstellung des Reihenabstandes;

Fig. 3 eine perspektivische Teil-Darstellung einer weiteren Ausführungsform der Sämaschine;

Fig. 4A und Fig. 4B Prinzipsskizzen der Sämaschine in der Ausführungsform gemäß Fig. 1 und 2 zur Veranschaulichung des Verstellspektrums für den Seitenab stand der Säaggregate;

Fig. 5A und Fig. 5B Prinzipsskizzen einer weiteren Ausführungsform der Sämaschine mit unterschiedlichen Einstellungen der Säaggregate;

Fig. 6 eine schematische Draufsicht einer Seite einer weiteren Ausführungsform der Sämaschine in einer ersten Einstellung des Seitenabstandes der Säaggregate; und

Fig. 7 eine Draufsicht der Ausführungsform gemäß Fig. 6 mit verändertem Seitenabstand der Säaggregate.

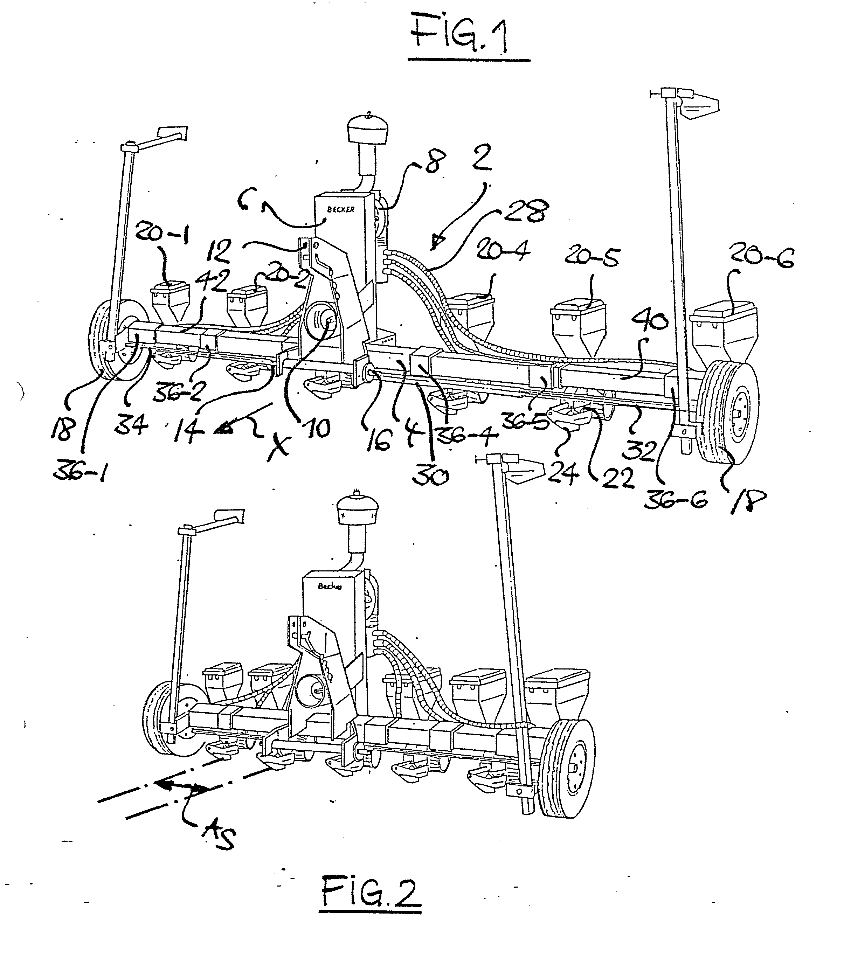

In Fig. 1 ist mit dem Bezugszeichen 2 eine sechsreihige Einzelkornsämaschine bezeichnet, die einen quer zur Fahrtrichtung X angestellten Trägerrahmen 4 aufweist, der zentral einen Aufbau 6 zur Halterung eines Gebläses 8 hat. Mit 10 ist der Anschluß an eine Zapfwelle für das nicht dargestellte landwirtschaftliche Nutzfahrzeug angedeutet. 12 bezeichnet die Anschlußstelle für einen Oberlenker, während mit 14 und 16 die Anschlußstellen für nicht dargestellte Unterlenker des Nutzfahrzeugs bezeichnet sind. Die Sämaschine 2 kann somit an die Dreipunkt-Hydraulik des landwirtschaftlichen Nutzfahrzeugs angebaut bzw. aufgesattelt werden. Zu diesem Zweck sind Tragräder 18 vorgesehen, die sich am Trägerrahmen 4 abstützen.

Der Trägerrahmen 4 trägt sechs Säaggregate 20-1 bis 20-6, von denen in Fig. 1 im oberen Teil der jeweilige Saatgutbehälter sichtbar ist. Im unter-

en Bereich weist jedes Säaggregat ein Vereinzelungs-Zellenrad 22, ein vorlaufendes Säschar 24 und eine nachlaufende Andruckwalze 26 auf. Der Aufbau derartiger Säaggregate ist an sich bekannt, so daß hierauf nicht näher eingegangen werden soll. Mit 28 sind Druckluftleitungen bezeichnet die zu den einzelnen Säaggregaten führen, um die Saatgutvereinzelung vorzunehmen.

Insbesondere bei der Einzelkorn-Aussaat, wie sie beim Aussäen von Rüben, Sonnenblumen oder Mais Anwendung findet, ist es erforderlich, das Vereinzelungs-Zellenrad 22 synchronisiert zur Fahrgeschwindigkeit der Sämaschine anzutreiben. Zu diesem Zweck dient eine zentrale, parallel zum Trägerrahmen 4 verlaufende Antriebswelle 30. die zwei Teleskop-Wellenstummel 32 und 34 aufweist, die jeweils antriebsmäßig mit einem der Tragräder 18 gekoppelt sind. Die Antriebswelle 30 und die Teleskop-Wellenstummel 32 und 34 stehen im Bereich eines jeden Säaggregats 20-1 bis 20-6 mit einem zugehörigen - in Fig. 1 nicht näher gezeigten -Getriebe in Eingriff, das den Drehantrieb auf die jeweiligen Vereinzelungs-Zellenräder 22 überträgt.

Die einzelnen Säaggregate 20-1 bis 20-6 ebenso wie die Tragräder 18 sind auf dem Trägerrahmen 4 leicht verschiebbar gelagert und in vorbestimmten Positionen feststellbar. Zu diesem Zweck weist jedes Säaggregat einen Anschlußkopf 36-1 bis 36-6 auf, der formschlüssig den Trägerrahmen 4 in Form eines Rechteckrohres bzw. quadratischen Rohres umgibt. Die Anschlußköpfe 36-2, 36-3, 36-4 und 36-5 sind gleitend verschiebbar auf dem mit 38 bezeichneten Rechteckrohr gelagert. Die seitlichen Anschlußköpfe 36-1 und 36-6, die zugleich die Halterungen für die Tragräder 18 bilden, sind fest auf einem Teleskoprohr 40 bzw. 42 angebracht, das in das Rechteckrohr 38 hinein bzw. aus diesem heraus verschiebbar ist. Es ist ferner eine nicht näher dargestellte Arretiereinrichtung vorgesehen, um die einzelnen Säaggregate in der in Fig. 1 gezeigten Relativlage zueinander bzw. zum Trägerrahmen 4 zu fixieren.

In Fig. 1 ist die Einzelkornsämaschine in einem Betriebs zustand gezeigt, in dem die größtmögliche Arbeitsbreite gegeben ist. Der Abstand der Säaggregate untereinander beträgt in diesem Falle beispielsweise etwa 700 bis 800 mm. wie er beispielsweise für die Aussaat von Mais regelmäßig gewählt wird. Fig. 2 zeigt die Einzelkornsämaschine gemäß Fig. I mit zusammengefahrenen Säaggregaten, wobei in diesem Fall der Seitenabstand $A_S$ der einzelnen Säaggregate 20-1 bis 20-6 untereinander lediglich etwa 400 bis 500 mm beträgt. Dieser Seitenabstand, der dem Reihenabstand der Aussaat entspricht, wird beispielsweise für das Säen von Rüben gewählt. Die Besonderheit des Erfindungsgegenstandes liegt darin. daß der Übergang vom Betriebszustand gemäß Fig. 1 in den Zustand gemäß Fig. 2 einfach dadurch zustande kommt, daß unter Verwendung einer Hilfskrafteinrichtung, beispielsweise einer Hydraulik-Kolben-Zylindereinheit das jeweils äußerste Säaggregat 20-1 und 20-6 nach innen verschoben wird. Hierbei verschiebt sich zunächst das Teleskoprohr 40 bzw. 42 in das Rechteckrohr 38 und der Teleskop-Wellenstummel 32 bzw. 34 in die Antriebswelle 30. Sobald das äußerste Säaggregat 20-6 bzw. 20-1 dem nächst inneren Säaggregat 20-5 bzw. 20-2 so nahe gekommen ist, daß der neu einzustellende Seitenabstand $A_S$ erreicht ist, wird dieses nächst innere Säaggregat unter Zuhilfenahme einer nachfolgend noch näher zu beschreibenden Mitnahmeeinrichtung in der Bewegung mitgenommen. so daß sich auch dieses Säaggregat unter gleitender Verschiebung des zugehörigen Anschlußkopfes 36-5 bzw. 36-2 auf dem Rechteckrohr 38 nach innen bewegt. Schließlich werden auch noch die beiden inneren Säaggregate 20-3 und 20-4 nach Erreichen des oben erwähnten neuen Seitenabstandes $A_S$ von der Bewegung nach innen erfaßt und unter gleitender Verschiebung der jeweiligen Anschlußköpfe 36-3 und 36-4 nach innen gegen einen Anschlag gefahren. Selbstverständlich sind zuvor ggf. vorhandene Arretiereinrichtungen im Bereich der Anschlußköpfe zu lösen. Nach dieser Betätigung der Hilfs krafteinrichtung, die vorzugsweise entweder bei komplett ausgehobener Sämaschine 2 unter Zuhilfenahme der Dreipunkt-Hydraulik oder aber bei ausgehobenen Säaggregaten erfolgt, ist die Einzelkornsämaschine sofort für das Aussäen mit neuem Reihenabstand $A_S$ bereit. Es liegt auf der Hand. daß in dieser Relativlage der Säaggregate zueinander auch der Straßentransport ohne weiteres möglich ist. Für den Straßentransport genügt es möglicherweise bereits, lediglich die äußersten Säaggregate 20-1 und 20-6 und ggf. noch die daneben liegenden Säaggregate 20-2 und 20-5 nach innen zu verschieben und anschließend den Hydraulikkolben zu sperren.

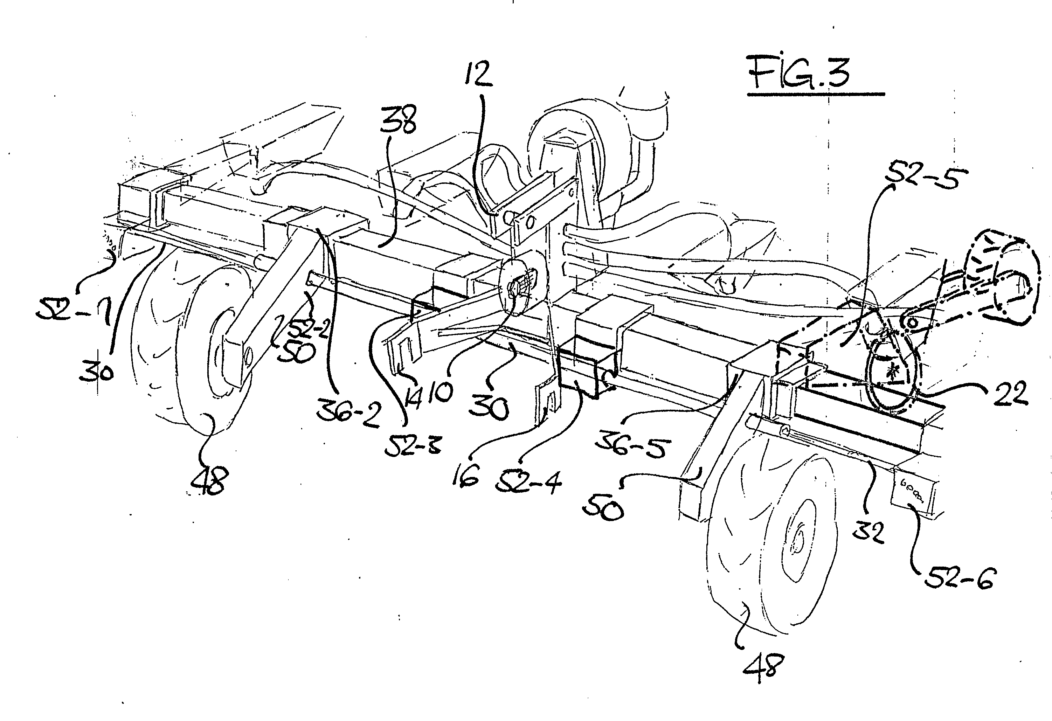

In Fig. 3 ist eine weitere Ausführungsform der Einzelkornsämaschine gezeigt. Abweichend von der Ausführungsform gemäß Fig. 1 sind bei dieser Variante die beiden Tragräder 48 nicht an den äußersten Säaggregaten, sondern an den jeweils mittleren Säaggregaten einer Sämaschinenseite befestigt. Mit 50 sind Radschenkel bezeichnet, die sich auf der den jeweiligen Säaggregaten abgewandten Seite der zugehörigen Anschlußköpfe 36-2 und 36-5 weg erstrecken. Die Radschenkel lagern die zentrale Antriebswelle 30. deren Drehbewegung über ein zugehöriges Getriebe 52-1 bis 52-6 auf das zugehörige Vereinzelungs-Zellenrad 22 übertragen wird. In Fig. 3 ist das zugehörige Getriebe 52-5 lediglich für ein einziges Vereinzelungs-Zellenrad 22 angedeutet. Selbstverständlich ist jedem Säaggregat ein identischer Antrieb zugeordnet.

Man erkennt aus der Darstellung gemäß Fig. 3, daß beim Verschieben der äußersten Säaggregate nach innen zunächst die Teleskop-Wellenstummel 30 und 32 in die Antriebswelle 30 hinein verschoben werden. Bei Weiterverschiebung unter Mitnahme der inneren Säaggregate werden zunächst die Radschenkel 50 relativ zur Welle 30 verschoben, wobei die getriebemäßige Kraftübertragung aufrechterhalten wird. In diesem Zusammenhang kann eine verzahnte Welle 30 Anwendung finden, die sich durch eine entsprechende innen- und außenverzahnte Hülse im Bereich der jeweiligen Getriebe 52-2 bis 52-5 erstreckt. In gleicher Weise kann auch dann das Getriebe 52-4 bzw. 52-3 relativ zur zentralen Antriebswelle 30 verschoben werden, ohne dadurch die Drehkraftübertragung zu unterbrechen.

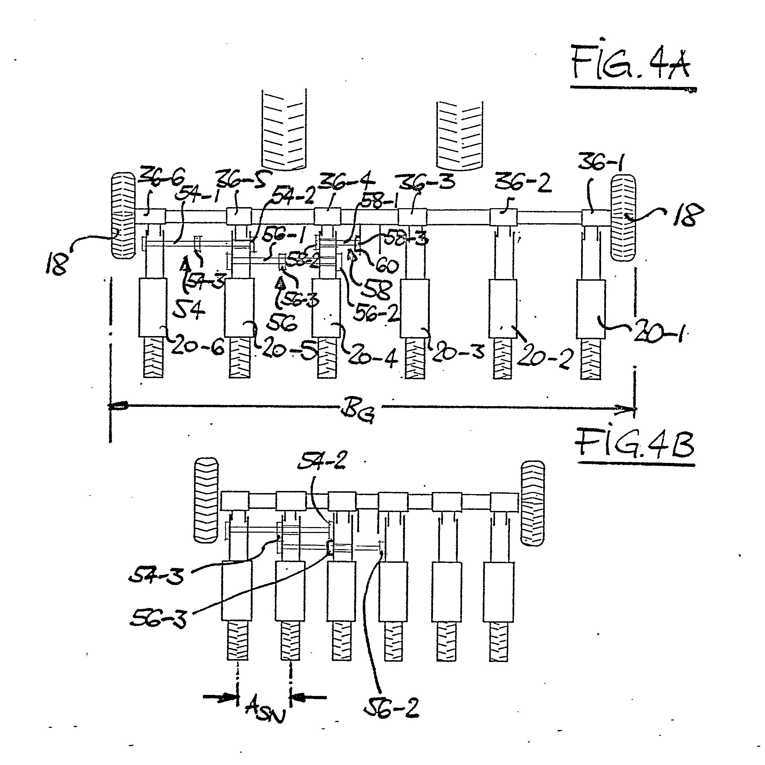

In Fig. 4 ist nocheinmal schematisch gezeigt, in welchem Bereich die Arbeitsbreite der Sämaschine durch eine zentrale Verstellbewegung veränderbar ist. Aus Vereinfachungsgründen sind diejenigen Teile, die den Komponenten der Ausführungsform der Fig. 1 entsprechen, mit identischen Bezugszeichen bezeichnet.

In Fig. 4 sind die vorstehend erwähnten Distanzhalteeinrichtungen angedeutet und mit den Bezugszeichen 54, 56 und 58 bezeichnet. Die Distanzhalteeinrichtungen 54 und 56 bestehen jeweils aus einem Stab 54-1 bzw. 56-1, der jeweils fest am äußeren Säaggregat 20-6 bzw. 20-5 festgelegt ist. Auf der anderen Seite erstreckt sich der Stab mit Spiel durch das jeweils nächste, innere Säaggregat 20-5 bzw. 20-4 und trägt dort einen sog. Zug-Anschlagkörper 54-2 bzw. 56-2. Zwischen den benachbarten Säaggregaten ist auf dem jeweiligen Stab 54-1 und 56-1 ein vorzugsweise verstellbarer Druck-Anschlagkörper 54-3 bzw. 56-3 angeordnet. Zur Verstellung kann beispielsweise ein Innengewinde dienen, das mit einem Außengewinde im Bereich des Distanzhaltestabes 54-1 bzw. 56-1 zusammenwirkt. Es ist jedoch auch möglich, die Druck-Anschlagkörper rein verschiebbar auf dem Distanzhaltestab anzuordnen und eine separate Arretiereinrichtung, beispielsweise in Form einer Stiftverbindung, vorzusehen.

Für das jeweils innerste Säaggregat 20-4 bzw. 20-3 jeder Sämaschinenseite ist die Distanzhalteeinrichtung 58 vereinfacht ausgeführt. Ein Stab 58-1, der sich auf der einen Seite fest an einem Anschlag 60 abstützt, erstreckt sich mit Spiel durch das innerste Säaggregat 20-4 bzw. 20-3 und trägt am anderen Ende einen Anschlagkörper 58-2, der die äußerste Position des inneren Säaggregats 20-4 bzw. 20-3 festlegt. Mit 58-3 ist ein innerer Anschlagkörper bezeichnet, der einstellbar auf dem Stab 58-1 gehalten ist und die innerste Lage des inneren Säaggregats 20-4 bzw. 20-3 bestimmt. Auf der in Fig. 4A rechten Seite sind entsprechende Distanzhalteeinrichtungen vorgesehen, die jedoch aus Einfachheitsgründen nicht näher beschrieben werden sollen.

Wie erwähnt ist die in Fig. 4A gezeigte Sämaschine in einem Betriebszustand, in der die einzelnen Säaggregate den größtmöglichen Abstand voneinander haben. Dies ist bei herkömmlichen Pflanzmethoden, beispielsweise bei der Aussaat von Mais, der Fall, der in Reihenabständen von 500 bis 600 mm ausgesät wird. Es ergibt sich auf diese Weise eine Gesamtbreite $B_G$ der Sämaschine von ca. 4,5 m. In diesem Zustand ist die Sämaschine auf der Straße nicht mehr verfahrbar. Zum Transport der Sämaschine auf der Straße ist es mit dem erfindungsgemäßen Aufbau der Sämaschine lediglich nötig, zumindest die äußersten Anschlusköpfe 36-6 bzw. 36-1 bezüglich des Trägerrahmens 4 zu entarretieren und diese Säaggregate unter Zuhilfenahme der vorstehend erwähnten Antriebseinrichtung, beispielsweise in Form einer Kolben-Zylindereinheit, nach innen zu verschieben. Für den Fall, daß der Verschiebeweg der äußeren Säaggregate noch nicht ausreichen sollte, um die Gesamtbreite der Sämaschine auf ein für den Transport auf der Straße zulässiges Maß zu reduzieren, werden die nächst inneren Anschlußkopfe 36-5 bzw. 36-2 entarretiert, so daß diese zusammen mit den äußeren Säaggregaten gemeinsam nach innen verschoben werden können. Die Säaggregate können auf diese Art und Weise kompakt zusammengefahren werden, wodurch sich ein vereinfachter Transport der Sämaschine ergibt. Durch geeignete Voreinstellung der Anschlagkörper 54-3, 56-3 und 58-3 ergibt sich darüber hinaus jedoch der zusätzliche Vorteil, daß mit einer einzigen Antriebsbewegung des äußersten Säaggregats 20-6 bzw. 20-1 eine Umrüstung der Sämaschine auf einen neuen Reihenabstand erfolgen kann. Hierzu ist es lediglich erforderlich, die einzelnen Anschlagkörper 54-3, 56-3 und 58-3 so auf den jeweiligen Distanzhaltestäben zu verschieben und dann zu arretieren, daß die Mitnahme des jeweils nächst inneren Säaggregats in dem neu einzustellenden Seitenabstand $A_{SN}$ erfolgt, wobei der innerste Anschlagkörper 58-3 so positioniert werden muß, daß die Verschiebebewegung des innersten Säaggregats 20-4 bzw. 20-3 in einem Abstand vom Zentrum der Sämaschine endet, der dem halben neu einzustellenden Seitenabstand $A_{SN}$ entspricht. Fig. 4B läßt erkennen, daß in diesem Betriebszustand der Sämaschine die jeweiligen Druck-Anschlagkörper 54-3 und 56-3 an den jeweiligen Anschlagflächen der Säaggregate anliegen. Es ist auf diese Weise möglich, den Reihenabstand in kürzester Zeit von beispielsweise 800 mm auf etwa 400 bis 500 mm zu reduzieren, der für die Aussaat von Rüben regelmäßig gewählt wird.

Für den Fall daß die Sämaschine auf einen breiteren Reihenabstand von beispielsweise 500 bis 600 mm umgerüstet werden soll, der beispielsweise für die Aussaat von Sonnenblumen gewählt wird, ist es von Vorteil, den jeweils inneren Zug-Anschlagkörper 54-2 bzw. 56-2 ebenso wie den Anschlagkörper 58-2 des innersten Distanzhaltestabs 58-1 einstellbar auf dem jeweiligen Distanzhaltestab zu befestigen. Zur Vorbereitung der Umrüstmaßnahme wird dann dieser betreffende Anschlagkörper so eingestellt, daß er bei Verschiebung des äußersten Säaggregats 20-6 bzw. 20-1 das nächst innere Säaggregat 20-5 bzw. 20-2 im neu einzustellenden Seitenabstand mitnimmt. Der Anschlagkörper 58-2 dient als letzter Anschlag für die gesamte Bewegung der Säaggregate nach außen.

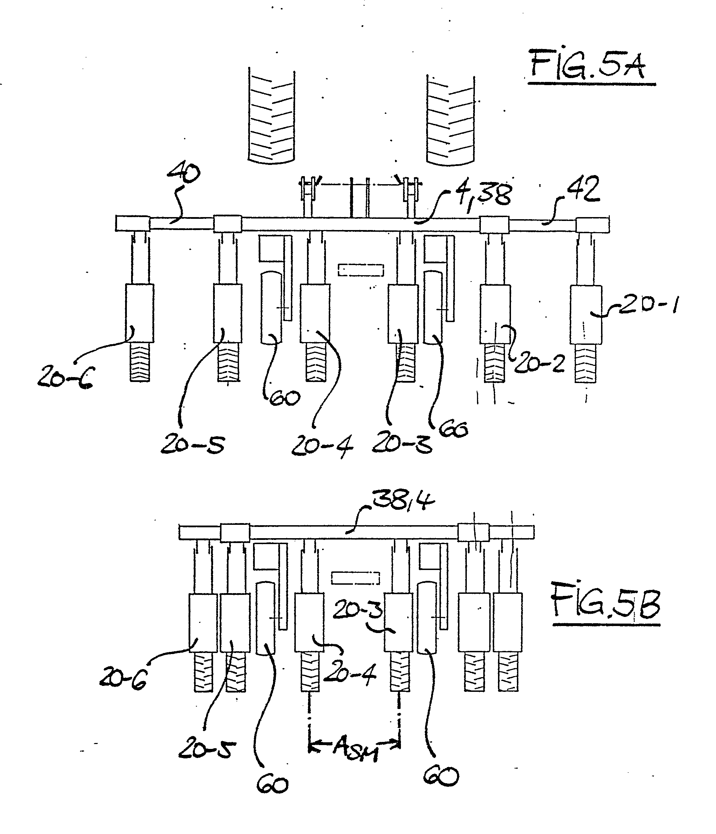

Bei den zuvor beschriebenen Ausführungsformen ist dafür Sorge getragen, daß sich die Tragräder 18 mit der Bewegung der Säaggregate verschieben, wodurch die Voraussetzung dafür geschaffen wird, daß die Sämaschine nach dem Umrüsten auf einen neuen Reihenabstand mit allen Säaggregaten einsetzbar ist. Denn die Tragräder 18 laufen unabhängig vom eingestellten Seitenabstand ständig neben der Saatspur. Eine vereinfachte Variante ist in Fig. 5 dargestellt. Diese Sämaschine unterscheidet sich von den zuvor beschriebenen Ausführungsformen in zweierlei Hinsicht. Zum einen sind die Tragräder mit den verschiebbaren Säaggregaten nicht ohne weiteres mit verschiebbar. Zum anderen sind die inneren Säaggregate 20-3 und 20-4 nicht mit einer Gleitführung auf den Trägerrahmen 4 versehen. Bezüglich der Lagerung und des Antriebs der jeweils äußeren Säaggregate 20-1 und 20-2 bzw. 20-6 und 20-5 gilt das zuvor unter Bezugnahme auf die Ausführungsformen gemäß Fig. 1 bis 4 Gesagte. Es ist somit mit der Ausführungsform gemäß Fig. 5A möglich, durch Antrieb der jeweils äußersten Säaggregate 20-1 und 20-6 diese - wie in Fig. 5 veranschaulicht -nach innen zu verschieben und dadurch nicht nur die Gesamtbreite der Maschine zu verringern, sondern unter Zuhilfenahme der Distanzhalter - wie in Fig. 5 aus Gründen der Vereinfachung nicht erneut dargestellt sind - auf einen neuen Seitenabstand voreinzustellen. Der Seitenabstand $A_{SN}$ zwischen den mittleren Säaggregaten 20-3 und 20-4 bleibt allerdings unverändert.

Bei der Ausführungsform gemäß Fig. 5A ist die Anordnung derart getroffen, daß beim Nach-Innen-Schieben der äußeren Säaggregate 20-6 und 20-1 der Seitenabstand zwischen den beiden benachbarten äußeren Säaggregaten 20-6 und 20-5 kleiner wird als der Seitenabstand zwischen dem Säaggregat 20-5 und 20-4. Es kann jedoch durch geeignete Einstellung der vorstehend beschriebenen Distanzhalteeinrichtungen ohne weiteres dafür gesorgt werden, daß sich zwischen den Säaggregaten einer Sämaschinenseite ein einheitlicher, neuer Seitenabstand einstellt. Fig. 5 macht deutlich, das durch die Mitverschiebung zumindest eines weiteren Säaggregats bei Antrieb des jeweils äußersten Aggregats in kürzester Zeit eine Vorbereitung der Sämaschine entweder für den Straßentransport oder für eine andere Aussaat durchgeführt werden kann.

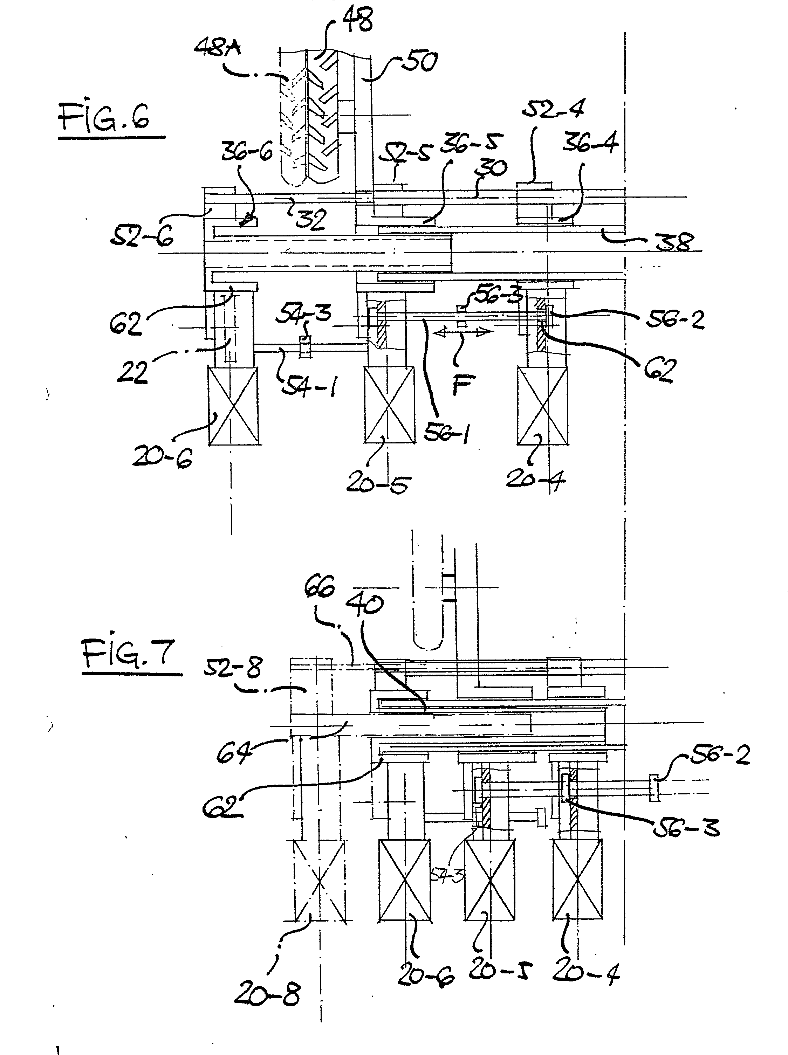

Fig. 6 zeigt Einzelheiten einer weiteren Ausführungsform der Sämaschine, die der Variante gemäß Fig. 3 ähnlich ist. Aus diesem Grunde sind wiederum diejenigen Bauteile der Maschine, die den Komponenten der Ausführungsform gemäß Fig. 3 entsprechen, mit identischen Bezugszeichen bezeichnet. Aus Gründen der Vereinfachung der Beschreibung ist nur eine Seite der Sämaschine dargestellt. Die Symmetrielinie ist mit strichpunktierter Linie angedeutet.

Fig. 6 zeigt die Sämaschine in sechsreihiger Ausführung und in einer Vorbereitung für die Aussaat von Mais, d. h. mit einem maximalen Reihenabstand von beispielsweise 800 mm. Man erkennt die Anschlußköpfe 36-4 bis 36-6, von denen der Anschlußkopf 36-5 den Radschenkel 50 trägt. Mit 52-4 bis 52-6 sind die einzelnen Getriebe bezeichnet, die zur Übertragung der Drehantriebskraft von der zentralen Antriebswelle 30 bzw. den Teleskop-Wellenstummel 32 auf die Vereinzelungs-Zellenräder dienen, von denen lediglich das Zellenrad 22 des Aggregats 20-6 angedeutet ist. Aus Fig. 6 ist im einzelnen ersichtlich, in welcher Weise das Säaggregat 20-6 verschiebbar am Rechteckrohr 38 befestigt ist. Die Anordnung ist derart getroffen, daß in der vollkommen nach innen geschobenen Position des äußersten Säaggregats 20-6 eine Führungshülse 62 auf dem Rechteckrohr 38 zu liegen kommt, wodurch zusätzlich Bauraum eingespart wird. Anhand der beiden benachbarten Aggregate 20-5 und 20-4 ist die Funktionsweise der Distanzhalteeinrichtung dargestellt. Der Distanzhaltestab 56-1 ist beispielsweise ortsfest am Säaggregat 20-5 befestigt und erstreckt sich mit Spiel durch eine Ausnehmung 62 am benachbarten Säaggregat 20-4, hinter der der Distanzhaltestab 56-1 den Zug-Anschlagkörper 56-2 trägt. Mit dem Doppelpfeil F ist die verschiebbare Anordnung des Druck-Anschlagkörpers 56-3 auf dem Distanzhaltestab 56-1 angedeutet. In gleicher Weise fungiert der noch gezeigte Distanzhaltestab 54-1. Fig. 6 macht deutlich, daß es auf diese Art und Weise genügt, das jeweils innerste Aggregat 20-4 einer Sämaschinenseite in vorbestimmtem Abstand, d. h. im halben neu einzustellenden Seitenabstand der Saatreihen von der Symmetrieachse zu positionieren, um auf diese Weise über die Distanzhaltestäbe 54-1 und 56-1 bei voll ausgefahrenem äußersten Säaggregat 20-6 alle Säaggregate bezüglich des Trägerrahmens 4 festzulegen.

Fig. 7 zeigt die Ausführungsform gemäß Fig. 6 bei vollkommen zusammengefahrenen Säaggregaten. In dieser Position stützt sich der Druck-Anschlagkörper 56-3 am Säaggregat 20-4 ab, so daß er dieses zunächst mitnehmen und schließlich in Lage halten kann. Entsprechendes gilt für den Druck-Anschlagkörper 54-3. Der Seitenabstand der Säaggregate untereinander beträgt in dieser zusammengefahrenen Position der Säaggregate beispielsweise lediglich 450 mm. Um dafür zu sorgen, daß das mit verschobene Trägerrad 48 nicht in den Bereich der Saat gelangt, kann es von Vorteil sein, das Trägerrad - wie in Fig. 6 mit strichpunktierten Linien angedeutet - als Zwillingsrad auszubilden und einen Radteil 48A für die Aussaat bei kleinem Seitenabstand von beispielsweise 450 mm abzunehmen.

In Fig. 7 ist mit strichpunktierten Linien ein zusätzliches Säaggregat 20-8 angedeutet, das auf einem weiteren Teleskoprohr 64 sitzt und in das Teleskoprohr 40 eingreift. Mit 66 ist eine weitere Teleskopwelle bezeichnet, die sich im Teleskop-Wellenstummel 32 axial verschieben läßt und mit einem zugehörigen Getriebe 52-8 des Säaggregats 20-8 in Antriebseingriff steht. Die Ausführungsform gemäß Fig. 7 macht deutlich, daß es durch die erfindungsgemäßen Maßnahmen gelingt, auch Sämaschinen mit mehr als sechs Reihen schnell und wirtschaftlich auf unterschiedliche Reihenabstände bzw. vom Säbetrieb auf den Fahrbetrieb umzurüsten.

Selbstverständlich sind Abweichungen von den gezeigten Ausführungsformen möglich, ohne dadurch den Grundgedanken der Erfindung zu verlassen. So ist es beispielsweise möglich, die Distanzhaltestäbe fest am jeweils inneren der benachbarten Säaggregate festzulegen und im benachbarten äußeren Säaggregat eine Durchtrittsöffnung für die Verschiebebewegung der Distanzhaltestäbe bereitzustellen. Es ist ferner möglich, den Antrieb der Säaggregate zur Veränderung des jeweiligen Seitenabstands der Aggregate untereinander mit einer Zugkette zu bewerkstelligen. Schließlich ist es auch möglich, mit einer einheitlichen Distanzhaltestange zu arbeiten, die sich parallel zum Trägerrahmen erstreckt und selbst teleskopartig ausgeführt ist. Es ist ferner möglich, mit einem pfeilartigen Trägerrahmen zu arbeiten, so daß die einzelnen Rahmenhälften mit der Fahrtrichtung einen spitzen Winkel einschließen.

Die Erfindung schafft somit eine mehrreihige Sämaschine, insbesondere eine Einzelkornsämaschine, bei der ein zur Fahrtrichtung angestellter Tragrahmen eine Vielzahl von Säaggregaten trägt, deren Seitenabstand zueinander einstellbar ist. Der Rahmen bildet für zumindest zwei benachbarte Säaggregate einer Sämaschinenseite eine Gleitführung. Zwischen diesen Aggregaten ist ein in der wirksamen Länge einstellbarer Distanzhalter vorgesehen, über den bei Verschiebung des einen Aggregats eine Mitnahme des benachbarten Aggregats in vorbestimmtem Seitenabstand erfolgt. Durch diese Maßnahmen gelingt es, die Sämaschine mit wenigen Handgriffen und in kürzester Zeit von Säbetrieb auf Fahrbetrieb bzw. von einem Reihenabstand auf den anderen umzurüsten.

## Ansprüche

1. Mehrreihige Sämaschine, insbesondere Einzelkornsämaschine, bei der ein zur Fahrtrichtung angestellter Tragrahmen eine Vielzahl von Säaggregaten trägt, deren Seitenabstand zueinander einstellbar ist, **dadurch gekennzeichnet,** daß der Rahmen (4, 38) für zumindest zwei benachbarte Säaggregate (20) einer Sämaschinenseite eine Gleitführung bildet und zwischen diesen Aggregaten ein in der wirksamen Länge einstellbarer Distanzhalter (54, 56) vorgesehen ist, über den bei Verschiebung des einen Aggregats (20-6; 20-5) eine Mitnahme des benachbarten Aggregats (20-5; 20-4) in vorbestimmtem Seitenabstand ($A_{SN}$) erfolgt.

2. Sämaschine nach Anspruch 1, **dadurch gekennzeichnet,** daß die jeweils benachbarten äußeren Säaggregate (20-1, 20-2, 20-5, 20-6) über eine Gleitführung mit dem Trägerrahmen (4, 38) verbunden sind.

3. Sämaschine nach Anspruch 2, **dadurch gekennzeichnet,** daß zumindest die beiden inneren Säaggregate (20-3, 20-4) einen fest eingestellten Abstand ($A_{SN}$) zueinander sowie zu einem daneben liegenden Stützrad (60) haben, das ebenfalls am Trägerrahmen (4, 38) montiert ist.

4. Sämaschine nach Anspruch 2, **dadurch gekennzeichnet,** daß jeweils einem Säaggregat (20-1, 20-2; 20-6, 20-5) auf jeder Seite der Sämaschine ein verschiebbares Stütz- oder Trägerrad (18; 48, 48A) zugeordnet ist.

5. Sämaschine nach Anspruch 4, **dadurch gekennzeichnet,** daß sämtliche Säaggregate (20-1 bis 20-6) über eine Gleitführung am Trägerrahmen (4, 38) angebaut sind.

6. Sämaschine nach einem der Ansprüche 1 bis 5, **dadurch gekennzeichnet,** daß die äußeren Säaggregate (20-1, 20-6) fest mit einem Rohr (40, 42) verbunden sind, das teleskopartig im Trägerrahmen (4) verschiebbar und an vorbestimmten Positionen relativ zum Trägerrahmen festlegbar ist.

7. Sämaschine nach einem der Ansprüche 1 bis 6, **dadurch gekennzeichnet,** daß die verschiebbaren Säaggregate jeweils einen Anschlußkopf (36-1 bis 36-6) aufweisen, der mit dem Trägerrahmen (4, 38) formschlüssig in Eingriff steht.

8. Sämaschine nach einem der Ansprüche 1 bis 7, **dadurch gekennzeichnet,** daß zumindest den äußeren Säaggregaten (20-1, 20-6) eine Arretiereinrichtung zur Festlegung ihrer Relativlage am Trägerrahmen (4, 38) zugeordnet ist.

9 Sämaschine nach einem der Ansprüche 1 bis 8, **dadurch gekennzeichnet,** daß die Säaggregate über die jeweils äußeren Aggregate unter gegenseitiger Abstützung mittels der Distanzhalter (54, 56) in vorbestimmter Lage zueinander gehalten sind.

10. Sämaschine nach einem der Ansprüche 1 bis 9, **dadurch gekennzeichnet,** daß der Trägerrahmen ein Rechteckrohr (38) aufweist, das sich durch eine entsprechend dem Rohrquerschnitt gestaltete Innenausnehmung eines Anschluß kopfs (36) des jeweils verschiebbaren Säaggregats (20) erstreckt.

11. Sämaschine nach einem der Ansprüche 1 bis 10, bei dem die einzelnen Säaggregate mittels einer Antriebswelle antreibbar sind, die sich im wesentlichen entlang dem Trägerrahmen (4) erstreckt, **dadurch gekennzeichnet,** daß die Antriebswelle (30, 32, 34, 66) von einer Teleskopwelle gebildet ist, deren ineinandergreifende Wellenteile bei Relativverschiebung der Säaggregate (20) zueinander verschiebbar sind.

12. Sämaschine nach Anspruch 11, **dadurch gekennzeichnet,** daß die Antriebswelle über Stützräder (18; 48) antreibbar ist.

13. Sämaschine nach Anspruch 11, **dadurch gekennzeichnet,** daß die Antriebswelle über eine Zapfwelle eines Zugfahrzeugs antreibbar ist.

14. Sämaschine nach einem der Ansprüche 11 bis 13, **dadurch gekennzeichnet,** daß die Antriebswelle (30, 32, 34, 66) auf der den Säaggregaten (20) abgewandten Seite des Trägerrahmens (4, 38) angeordnet und in Radschenkeln (50) gelagert ist.

15. Sämaschine nach einem der Ansprüche 1 bis 14, **dadurch gekennzeichnet,** daß der Trägerrahmen Anschlußstellen (12, 14, 16) für die Dreipunkt-Hydraulik eines landwirtschaftlichen Nutzfahrzeugs hat.

16. Sämaschine nach einem der Ansprüche 1 bis 15, **dadurch gekennzeichnet,** daß den Säaggregaten (20) eine Hubeinrichtung zum Hochschwenken der zu verschiebenden Säaggregate zugeordnet ist.

17. Sämaschine nach einem der Ansprüche 1 bis 16, **dadurch gekennzeichnet,** daß der Distanzhalter einen Stab (54-1, 56-1) aufweist, der einerseits in einem äußeren Säaggregat (20-6; 20-5) festgelegt ist, sich mit Spiel durch eine Ausnehmung (62) im benachbarten, inneren Säaggregat (20-5; 20-4) erstreckt und dort einen Zuganschlagkörper (54-2; 56-2) sowie zwischen den Aggregaten einen Druck-Anschlagkörper (54-3; 56-3) trägt.

18. Sämaschine nach Anspruch 17, **dadurch gekennzeichnet,** daß zumindest der Druck-Anschlagkörper (54-3; 56-3) auf dem Stab (54-1; 56-1) einstellbar ist.

19. Sämaschine nach Anspruch 17 oder 18, **dadurch gekennzeichnet,** daß zumindest der Zuganschlagkörper (54-2, 56-2) fest an der zugehörigen Ausnehmung (62) verankerbar ist.

20. Sämaschine nach einem der Ansprüche 17 bis 19, **dadurch gekennzeichnet,** daß die Anschlagkörper (54-2, 54-3; 56-2, 56-3) auf dem Stab (54-1; 56-1) verschiebbar sind.

21. Sämaschine nach einem der Ansprüche 1 bis 20, **dadurch gekennzeichnet,** daß die einzelnen verschiebbaren Säaggregate (20) individuell bezüglich des Trägerrahmens (4, 38) arretierbar sind.

22. Sämaschine nach einem der Ansprüche 1 bis 21, **dadurch gekennzeichnet,** daß der Trägerrahmen (4) quer zur Fahrtrichtung der Sämaschine ausgerichtet ist.

23. Sämaschine nach einem der Ansprüche 1 bis 22, **gekennzeichnet durch** einen vorzugsweise stufenlos einstellbaren Seitenabstand zwischen den Säaggregaten (20) zwischen etwa 400 und etwa 800 mm.

24. Sämaschine nach einem der Ansprüche 1 bis 23, **gekennzeichnet durch** eine hydraulische Antriebseinrichtung für die Verschiebebewegung der Säaggregate (20).

25. Sämaschine nach einem der Ansprüche 1 bis 24, **dadurch gekennzeichnet,** daß der Trägerrahmen (4; 38) selbst ausziehbar gestaltet ist.

# FIG.1

# FIG.2

FIG.3

FIG.4A

FIG.4B

FIG.5A

FIG.5B

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3841413 (APPLEWHITE) <br> * Spalte 2, Zeile 25 – Spalte 4, Zeile 54; Figuren 1-7 * | 1-5, 7, 10, 12, 15, 16, 22 | A01C7/04 <br> A01C15/00 <br> A01B63/24 |
| A | EP-A-238465 (KARLSSON) <br> * Spalte 1, Zeile 51 – Spalte 3, Zeile 34; Figuren 1-3 * | 1, 2, 5, 15, 17, 22-24 | |
| A | FR-A-2371863 (SUGANO CORP.) <br> * Seite 2, Zeile 10 – Seite 5, Zeile 15; Figuren 1-5 * | 1, 5, 9, 15, 17-19, 22-24 | |

RECHERCHIERTE SACHGEBIETE (Int. Cl.5)

A01C
A01B

Der vorliegende Recherchenbericht wurde für alle Patentansprüche erstellt

| Recherchenort | Abschlußdatum der Recherche | Prüfer |
|---|---|---|
| DEN HAAG | 12 OKTOBER 1990 | VERMANDER R.H. |